# EUROPEAN PATENT APPLICATION

(11) **EP 4 663 686 A1**
(43) Date of publication of application: **17.12.2025**
(21) Application number: 24181879.8
(22) Date of filing: 13.06.2024
(51) Int. Cl.: C08G 65/336, C08L 71/00

(54) **ELECTRICALLY DEBONDABLE SILYL MODIFIED POLYMER-BASED ADHESIVE**

(71) Applicant: Henkel AG & Co. KGaA, 40589 Düsseldorf (DE)
(72) Inventor: Fleck-Kunde, Tom, 40589 Düsseldorf (DE); Buga, Duygu, 41564 Kaarst (DE)

(57) **Abstract**

The present invention relates to a debondable silyl modified polymer-based adhesive composition comprising a silyl group terminated polyether, a cross-linker, an electrically conductive particles, and an electrolyte. The composition according to the present invention is particularly suitable for use in bonding of the electrical components inside the e-vehicle battery.

## Description

### Technical field of the invention

The present invention relates to a debondable silyl modified polymer-based adhesive composition, which is particularly suitable for use in bonding of the electrical components inside the e-vehicle battery.

### Technical background

Adhesive bonds and polymeric coatings are commonly used in the assembly and finishing of manufactured goods. They are used in place of mechanical fasteners, such as screws, bolts and rivets, to provide bonds with reduced machining costs and greater adaptability in the manufacturing process. Adhesive bonds distribute stresses evenly, reduce the possibility of fatigue and seal the joints from corrosive species.

Whilst adhesive bonds thus offer many advantages over mechanical fasteners, it tends to be difficult to disassemble adhesively bonded objects where this is required in practical applications. The removal of the adhesive through mechanical processes - such as by sand blasting or by wire brushing - is often precluded, in part because the adhesive is disposed between substrates and is thus either inaccessible or difficult to abrade without corrupting the substrate surfaces. Disassembly through the application of chemicals and / or high temperature might be effective but can be time consuming and complex to perform moreover, the aggressive chemicals and/or harsh conditions required can damage the substrates being separated, rendering them unsuitable for subsequent applications.

As an exemplary case, it is evidently desirable to remove, replace and / or recycle components of automotive industry, such as electric car battery cells and casque, which have been attached within the devices using adhesives. However, such adhesives are typically strong in that they are designed to maintain adhesion both during drop or impact events and across a wide range of operating temperatures and other environmental conditions. If care is not taken, adhesive-bonded device components can therefore be damaged or destroyed when removing the components through mechanical processes or the application of chemicals.

Certain authors have sought to develop debondable adhesive compositions wherein the applied heat is used to disrupt the bonding at the interface of the adhesive and the substrate. The problem with the thermal debonding is that if a care is not taken, high temperatures may damage the substrates.

Noting these problems, certain authors have also sought to develop debondable adhesive compositions, wherein the passage of an electrical current through the cured compositions acts to disrupt the bonding at the interface of the adhesive and the substrate.

Also, water-based systems and UV activated acrylates have been used in the past as debonding adhesive layers. However, despite of the good debonding efficacy, the adhesion strength at room temperature, the poor adhesion on substrates like PP, PET or e-coated steel, and the poor compatibility with polyurethane thermal conductive adhesive were found dissatisfactory.

Therefore, there remains a need in the art to provide means to effectively debond bonded substrates, especially bonded structures in power control units or air- and moisture tight bond lines and gaskets of a larger surface area like electric vehicle battery lids.

### Summary of the invention

The present invention relates to a debondable adhesive composition comprising a) a silyl group terminated polyether; b) a cross-linker; c) an electrically conductive particles; and d) an electrolyte.

The present invention also relates to a cured product of the debondable adhesive composition according to the present invention.

The present invention also relates to use of the debondable adhesive composition according to the present invention for a bonding of the electrical components inside the e-vehicle battery.

The present invention encompasses a bonded structure comprising a first substrate having an electrically conductive surface; and, a second substrate having an electrically conductive surface; wherein the debondable adhesive or the cured debondable adhesive according to the present invention is disposed between the first and second substrates.

The present invention also encompasses a method of debonding the bonded structure according to the present invention, the method comprising the steps of: i) applying a voltage across both surfaces to form an anodic interface and a cathodic interface; and ii) debonding the surfaces.

Short description of the figures
Figures 1a and 1b illustrate the bonded structure according to the present invention.
Figures 2a and 2b illustrate the debonding according to the present invention.

### Detailed description of the invention

In the following passages the present invention is described in more detail. Each aspect so described may be combined with any other aspect or aspects unless clearly indicated to the contrary. In particular, any feature indicated as being preferred or advantageous may be combined with any other feature or features indicated as being preferred or advantageous.

In the context of the present invention, the terms used are to be construed in accordance with the following definitions, unless a context dictates otherwise.

As used herein, the singular forms "a", "an" and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps.

As used herein, the term "*consisting of*" excludes any element, ingredient, member or method step not specified.

The words "*preferred*", "*preferably*", "*desirably*" and "*particularly*" are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word "*may*" is used in a permissive sense - that is meaning to have the potential to - rather than in the mandatory sense.

The recitation of numerical end points includes all numbers and fractions subsumed within the respective ranges, as well as the recited end points.

All percentages, parts, proportions and then like mentioned herein are based on weight unless otherwise indicated.

When an amount, a concentration or other values or parameters is/are expressed in form of a range, a preferable range, or a preferable upper limit value and a preferable lower limit value, it should be understood as that any ranges obtained by combining any upper limit or preferable value with any lower limit or preferable value are specifically disclosed, without considering whether the obtained ranges are clearly mentioned in the context.

As used herein, the term "*one component (1K) composition*" refers to a composition where, during storage of the composition, the composition components are all admixed together but the properties of the composition, including viscosity, remain consistent enough over the time of storage to permit successful utility of the composition at a later time.

*"Two-component (2K) compositions"* are understood to be compositions in which a first component/part and a second component/part must be stored in separate vessels because of their (high) reactivity. The two components/parts are mixed only shortly before application and then react, typically without additional activation, with bond formation and thereby formation of a polymeric network. Herein higher temperatures may be applied in order to accelerate the cross-linking reaction.

As used herein, room temperature is 23°C plus or minus 2°C. As used herein, "*ambient conditions*" means the temperature and pressure of the surroundings in which the composition is located or in which a coating layer or the substrate of said coating layer is located.

As used herein the term "*debondable*" means that, after curing of the adhesive, the bond strength can be weakened by at least 50% upon application of voltage of 30-70V for 2-30 minutes. Bond strength is measured by Tensile Lap Shear (TLS) test performed at room temperature and based upon EN 1465:2009 (German version) Based on Adhesives - Determination of tensile lap-shear strength of bonded assemblies.

All references cited in the present specification are hereby incorporated by reference in their entirety.

Unless otherwise defined, all terms used in disclosing the invention, including technical and scientific terms, have the meaning as commonly understood by one of the ordinary skilled in the art to which this invention belongs to. By means of further guidance, term definitions are included to better appreciate the teaching of the present invention.

The present invention relates to a debondable adhesive composition comprising a) a silyl group terminated polyether; b) a cross-linker; c) an electrically conductive particles; and d) an electrolyte.

The Applicant has found out that the composition according to the present invention has good adhesion properties to bond electrical components inside the e-vehicle battery, while it can be debonded by applying an electrical stimulus to provide a clean debonding. In addition, the debondable adhesive according to the present invention can also act as a sealant, providing some moisture and gas isolation.

The debondable adhesive composition according to the present invention comprises a silyl group terminated polyether.

In a preferred embodiment, the silyl group terminated polyether is a polyoxyalkylene group-based polymer having at least one alkoxysilyl group.

The main chain structure of the silyl group terminated polyether may be linear or branched. It also may be a mixture of molecules having these structures.

Examples of the main chain of the polyether include polyoxyalkylene units those having a repeating unit represented by the general formula "-R₁-O-" (R₁ is divalent). R₁ is not particularly limited as long as it is a divalent alkylene group. R₁ is preferably an alkylene group having 1 to 14 carbon atoms, and more preferably a linear or branched alkylene group having 2 to 4 carbon atoms. Specific examples of R₁ include but are not limited to -CH₂O-, -CH₂CH₂O-, -CH₂CH(CH₃)O-, -CH₂CH(C₂H₅) O-, -CH₂C(CH₃) ₂O-, and -CH₂CH₂CH₂CH₂O-. Among these, the main chain of the polyether is preferably polypropylene oxide composed of -CH₂CH(CH₃)O-.

In one embodiment, the polyoxyalkyene group may comprise oxymethylene units (CHsO), oxyethylene units (C₂H₄O), oxypropylene units (C₃H₆O), oxybutylene units (C₄H₈O), oxytetramethylene units and mixtures thereof, preferably the polyoxyalkyene group comprise oxypropylene units (C₃H₆O) composed of -CH₂CH(CH₃)O-.

The polyoxyalkylene group-based polymer according to the present invention has at least one alkoxysilyl group, preferably, the silyl group contains two or three alkoxy groups. Preferably the alkoxy groups are selected from at least one of methyl dimethoxy silyl group, trimethoxy silyl group and triethoxy silyl group.

Suitable commercially available silyl group terminated polyether for use in the present invention include but is not limited to MS-polymers^{™}, dimethoxysily terminated polyether, trimethoxysily terminated polyether, S203H, S303H,S227, S327, SAX 220, SAT010, SAX015, SAX115, SAT145, AX602, MAX923, MAX951, SAX750, SAX590, MAX 451, MAX 480, MAX850 from Kaneka, Desmoseal^{®}, for example S XP 2458, S XP 2774, S XP 2821 from Covestro and ST47, ST 48, ST 77, ST 61, ST 61 LV, ST 81, ST 80 and TEGOPAC^{®} , for example Seal 100, Bond 150, and Bond 250 from Evonik.

The silylterminated polyether may be present in the debondable adhesive composition according to the present invention in a quantity from 25 to 45% by weight of the total weight of the composition, preferably from 27 to 40% and more preferably from 28 to 35%.

The debondable adhesive composition according to the present invention comprises a cross linker.

Suitable cross linkers may be used to modify the properties of the debondable adhesive composition, for example to improve environmental resistance. Suitable cross linkers for use in the present invention are for example silanes.

Preferably the cross linker is a silicon containing vinyl monomer, preferably selected from the group consisting of vinyltrimethoxysilane, vinyltriethoxysilane, methacryloxypropyltrimethoxysilane, vinyltris(2-methoxyethoxy)silane, methacryloxypropyltriethoxysilane, vinyltriacetoxysilane, vinylmethyldiethoxysilane, vinylmethyldimethoxysilane, vinylphenylmethyldimethoxysilane, vinylphenylmethyldiethoxysilane and mixtures thereof, more preferably the cross linker is vinyltrimethoxysilane.

The above listed cross-linkers are preferred due their fast reaction time.

Suitable commercially available cross linker for use in the present invention include but is not limited to vinyltrimethoxy silane from Sinopharm Chemical Reagent Co.,Ltd.

The cross linker may be present in the debondable adhesive composition according to the present invention in a quantity from 0.1 to 5% by weight of the total weight of the composition, preferably from 0.25 to 3% and more preferably from 0.5 to 2.5%.

The debondable adhesive composition according to the present invention comprises a catalyst. The catalyst promotes the reaction of moisture and/or water with the alkoxysilanes.

Suitable catalyst for use in the present invention is a tin catalyst. Preferably the tin catalyst is selected from the group consisting of dibutyltin dibutylate, dibutyltin dilaurate, dibutyl tin diacetate, dibutyltin maleate, dibutyltin diethoxide, dibutyltin dichloride, and mixtures thereof, more preferably the catalyst is dibutyltin dibutylate.

Suitable commercially available catalyst for use in the present invention include but is not limited to ZP-GM/KAT 50%ig from Henkel AG & Co. KGaA.

The catalyst may be present in the debondable adhesive composition according to the present invention in a quantity from 0.1 to 5% by weight of the total weight of the composition, preferably from 0.25 to 3% and more preferably from 0.5 to 2.5%.

The debondable adhesive composition according to the present invention comprises electrically conductive particles. The electrically conductive particles provide conductivity to the composition.

The Applicant has surprisingly found out that addition of electrically conductive particles into the composition according to the present invention will allow to decrease the quantity of an electrolyte, while maintaining good debonding properties.

Suitable electrically conductive particles for use in the present invention are carbon-based particles. Preferably the electrically conductive particles are selected from the group consisting of carbon nanostructures, carbon nanotubes, spherical graphite, graphite flakes, and mixtures thereof, preferably the electrically conductive particles are carbon nanostructures.

Carbon based particles are preferred because good quantity-conductivity ratio and low density.

Suitable commercially available electrically conductive particles for use in the present invention include but are not limited to GPX 802 from Cabot Corporation. Timrex C-Therm 011 or Timrex SFG 6 from Timerys, SG 22 from Unimate International, Vulcan X72R from Cabot, or Asbury 0985 from Asbury Graphite Mills.

The electrically conductive particles may be present in the debondable adhesive composition according to the present invention in a quantity from 0.01 to 5% by weight of the total weight of the composition, preferably from 0.1 to 3% and more preferably from 0.2 to 2%.

These electrically conductive particles quantities are preferred because quantity greater than 5% may increase the conductivity, but at the same adversely affect adhesion and debonding properties, whereas low quantities, mainly below 0.01% may lead no physical effect, and there is no desired effect to a quantity of an electrolyte.

The debondable adhesive composition according to the present invention comprises an electrolyte.

Suitable electrolyte for use in the present invention is a non-polymerizable electrolyte. The term "*non-polymerizable*" is intended to indicate that the electrolyte, whilst present in the composition, is not incorporated in an amount that can be measured into the polymeric matrix formed from reactive components. The non-polymerizable electrolyte contains no functional groups which are reactive with the other components in the composition.

Suitable electrolytes include the non-polymerizable salts of: ammonium; pyridinium; pyrrolidinium; phosphonium; imidazolium; oxazolium; guanidinium; sulfonium; and, thiazolium. In exemplary embodiments, the electrolyte of the present disclosure comprises at least one salt having a Formula selected from the group consisting of: 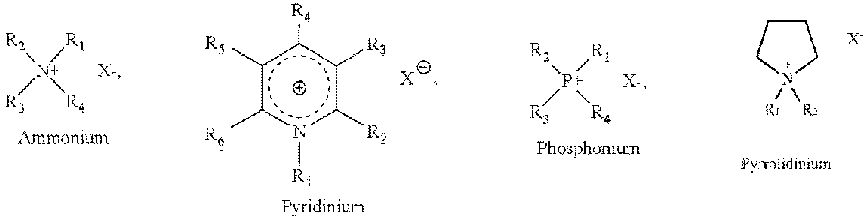 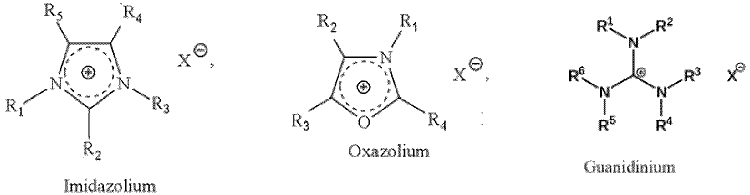 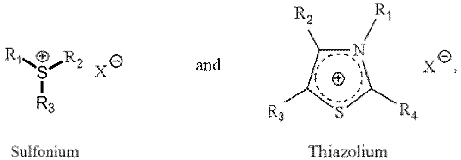 wherein:
R₁, R₂, R₃, R₄, R₅ and R₆ are independently selected from hydrogen, C₁-C₁₈ alkyl, C₃-C₁₈ cycloalkyl, C₆-C₁₈ aryl, C₇-C₂₄ aralkyl, -C(O)R^{q}, -C(O)OH, -CN or-NO₂;
R^{q} is C₁-C₆ alkyl; and,
X⁻ is a counter anion.

Where an ammonium salt is used, it may be subject to the proviso that at most three and desirably at most two of the groups R₁ to R₄ may be hydrogen.

As regards said moieties R₁ to R₆, the terms C₁-C₁₈ alkyl, C₃-C₁₈ cycloalkyl, C₆-C₁₈ aryl, C₇-C₂₄ aralkyl, expressly include groups wherein one or more hydrogen atoms are substituted by halogen atoms (e.g. C₁-C₁₈ haloalkyl) or hydroxyl groups (e.g. C₁-C₁₈ hydroxyalkyl). In particular, it is preferred that R₁, R₂, R₃, R₄, R₅ and R₆ are independently selected from hydrogen, C₁-C₁₂ alkyl, C₁-C₁₂ haloalkyl, C₁-C₁₂ hydroxyalkyl or C₃-C₁₂ cycloalkyl. For example, R₁, R₂, R₃, R₄, R₅ and R₆ may be independently selected from hydrogen, C₁-C₆ alkyl, C₁-C₆ haloalkyl or C₁-C₆ hydroxyalkyl.

There is no particular intention to limit the counter anion (X-) which may be employed in the non-polymerizable electrolytic salts. Exemplary anions may be selected from:
- Halides;
- Pseudohalides and halogen-containing compounds of the formulae PF₆ ⁻, CF₃SO₃ ⁻, (CF₃SO₃)₂N⁻, CF₃CO₂ ⁻ and CCl₃CO₂ ⁻,
- CN⁻, SCN⁻ and OCN⁻;
- Phenates;
- Sulfates, sulfites and sulfonates of the general formulae SO₄ ²⁻, HSO₄ ⁻, SO₃ ²⁻, HSO₃ ⁻, R^{a}OSO₃ ⁻ and R^{a}SO₃ ⁻;
- Phosphates of the general formulae PO₄ ³⁻, HPO₄ ²⁻, H₂PO₄ ⁻, R^{a}PO₄ ²⁻, HR^{a}PO₄ ⁻ and R^{a}R^{b}PO₄ ⁻;
- Phosphonates and phosphinates of the general formulae R^{a}HPO₃ ⁻,R^{a}R^{b}PO₂ ⁻ and R^{a}R^{b}PO₃ ⁻;
- Phosphites of the general formulae: PO₃ ³⁻, HPO₃ ²⁻, H₂PO₃ ⁻, R^{a}PO₃ ²⁻, R^{a}HPO₃ ⁻ and R^{a}R^{b}PO₃ ⁻;
- Phosphonites and phosphinites of the general formulae R^{a}R^{b}PO₂ ⁻, R^{a}HPO₂ ⁻, R^{a}R^{b}PO⁻ and R^{a}HPO⁻;
- Carboxylic acid anions of the general formula R^{a}COO⁻;
- Hydroxycarboxylic acids anions and sugar acid anions;
- Saccharinates (salts of o-benzoic acid sulfimide);
- Borates of the general formulae BO₃ ³⁻, HBO₃ ²⁻, H₂BO₃ ⁻, R^{a}R^{b}BO₃ ⁻, R^{a}HBO₃ ⁻, R^{a}BO₃ ²⁻, B(OR^{a})(OR^{b})(OR^{c})(OR^{d})⁻, B(HSO₄)⁻ and B(R^{a}SO₄)⁻;
- Boronates of the general formulae R^{a}BO₂ ²⁻ and R^{a}R^{b}BO⁻;
- Carbonates and carbonic acid esters of the general formulae HCO₃ ⁻, CO₃ ²⁻ and R^{a}CO₃ ⁻;
- Silicates and silicic acid esters of the general formulae SiO₄ ⁴⁻, HSiO₄ ³⁻, H₂SiO₄ ²⁻, H₃SiO₄ ⁻, R^{a}SiO₄ ³⁻, R^{a}R^{b}SiO₄ ²⁻, R^{a}R^{b}R^{c}SiO₄ ⁻, HR^{a}SiO₄ ²⁻, H₂R^{a}SiO₄ ⁻ and HR^{a}R^{b}SiO₄ ⁻;
- Alkyl- and arylsilanolates of the general formulae R^{a}SiO₃ ³⁻, R^{a}R^{b}SiO₂ ²⁻, R^{a}R^{b}R^{c}SiO⁻, R^{a}R^{b}R^{c}SiO₃ ⁻, R^{a}R^{b}R^{c}SiO₂ - and R^{a}R^{b}SiO₃²⁻;
- Pyridinates and pyrimidinates;
- Carboxylic acid imides, bis(sulfonyl)imides and sulfonylimides of the general formulae: 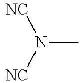 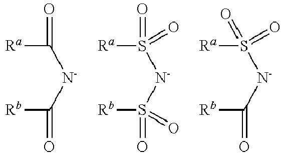
- Methides of the general formula: 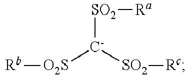
- Alkoxides and aryloxides of the general formula R^{a}O⁻; or,
- Sulfides, hydrogen sulfides, polysulfides, hydrogen polysulfides and thiolates of the general formulae S²⁻, HS⁻, [Sᵥ]²⁻, [HSᵥ]⁻ and [R^{a}S]⁻
   in which general formulae:
   v is a whole positive number of from 2 to 10; and,
   R^{a}, R^{b}, R^{c} and R^{d} are independently selected from hydrogen, halogen, C₁-C₁₂ alkyl, C₅-C₁₂ cycloalkyl, C₅-C₁₂ heterocycloalkyl, C₆-C₁₈ aryl, C₇-C₁₈ alkylaryl, C₇-C₁₈ aralkyl or C₅-C₁₈ heteroaryl.

As regards said moieties R^{a}, R^{b}, R^{c} and R^{d}, the terms C₁-C₁₂ alkyl, C₅-C₁₂ cycloalkyl, C₅-C₁₂ heterocycloalkyl, C₆-C₁₈ aryl, C₇-C₁₈ alkylaryl, C₇-C₁₈ aralkyl and C₅-C₁₈ heteroaryl expressly include groups wherein one or more hydrogen atoms are substituted by halogen atoms. For instance, CH₃, -CH₂F, -CHF₂ and -CF₃ represent exemplary C₁ alkyl groups.

Based on the definitions in the above list, preferred anions of the non-polymerizable electrolytic salts may be selected from the group consisting of: halides; pseudohalides and halogen-containing compounds as defined above; carboxylic acid anions, in particular formate, acetate, propionate, butyrate and octanoate; hydroxycarboxylic acid anions, such as lactate; pyridinates and pyrimidinates; carboxylic acid imides, bis(sulfonyl)imides and sulfonylimides; sulfates, in particular methyl sulfate and ethyl sulfate; sulfites; sulfonates, in particular methanesulfonate and p-toluenesulfonate (*tosylate*); and, phosphates, in particular dimethyl-phosphate, diethyl-phosphate and di-(2-ethylhexyl)-phosphate.

Preferably the electrolyte is selected from the group consisting of: 1-ethyl-3-methyl-1H-imidazol-3-um methansulfonate, 1-ethyl-3-methyl-1H-imidazol-3-um methyl sulfate, 1-methylimidazolium bis(trifluoromethylsulfonyl)imide, 3-methylimidazolium bis(trifluoromethylsulfonyl) imide, 1-ethyl-3-methylimidazolium bis(trifluoromethylsulfonyl)imide, 1-propyl-3-methylimidazolium bis(trifluoromethylsulfonyl)imide, 1-butyl-3-methylimidazolium bis(trifluoromethylsulfonyl)imide, 1-butyl-2,3-dimethylimidazolium bis(trifluoromethylsulfonyl) imide, 1-hexyl-3-methylimidazolium bis(trifluoromethylsulfonyl)imide, 1-octyl-3-methylimidazolium bis(trifluoromethylsulfonyl)imide, 1-methyl-3-octylimidazolium bis(trifluoromethylsulfonyl)imide, 1-decyl-3-methylimidazolium bis(trifluoromethylsulfonyl)imide, 1-dodecyl-3-methylimidazolium bis(trifluoromethylsulfonyl)imide, tetraethylphosphonium bis(trifluoromethylsulfonyl)imide, tetrabutylphosphonium bis(trifluoromethylsulfonyl)imide, tetraoctylphosphonium bis(trifluoromethylsulfonyl)imide, trihexyl(tetradecyl)phosphonium bis(trifluoromethylsulfonyl)imide, tridecyl(tetradecyl)phosphonium bis(trifluoromethylsulfonyl)imide, tributyl(methyl)phosphonium diethylphosphate, tributyl(ethyl)phosphonium diethylphosphate, tetraoctylphosphonium diethylphosphate, and, mixtures thereof, preferably the electrolyte is selected from 1-butyl-3-methylimidazolium bis(fluorosulfonyl)imide, tributyl(ethyl)phosphonium diethylphosphate, and mixtures thereof.

Suitable commercially available electrolyte for use in the present invention include but are not limited to Cyphos IL 169 from Solvay and BMIM-FSI from lolitec.

The electrolyte may be present in the debondable adhesive composition according to the present invention in a quantity from 0.05 to 10% by weight of the total weight of the composition, preferably from 0.05 to 8% and more preferably from 0.05 to 7%.

These quantities are preferred because quantity greater than 10% of the electrolyte may lead to good debonding effect, however the cure may be incomplete and therefore, initial adhesive properties may be adversely affected, whereas low quantities may lead to a lack of debonding effect.

The debondable adhesive composition according to the present invention may further comprise additional components which may be selected from the group consisting of non-electrically conductive fillers, adhesion promoters, extenders, dye/colourant, plasticizers, stabilizers, additional solvents, rheology modifiers, dispersing agents, fungicides, bactericides, algaecides and mixtures thereof.

The debondable adhesive composition according to the present invention may further comprise a non-electrically conductive filler. The presence of the non-electrically conductive filler may improve the initial adhesive properties of the composition.

Exemplary non-conductive fillers include but are not limited to calcium carbonate, calcium oxide, calcium hydroxide (lime powder), titanium oxide, precipitated and/or pyrogenic silicic acid, zeolites, bentonites, wollastonite, magnesium carbonate, diatomite, barium sulphate, alumina, clay, talc, sand, quartz, flint, mica, glass beads, glass powder, and other ground mineral substances. Short fibres such as glass fibres, glass filament, polyacrylonitrile, carbon fibres, or polyethylene fibres can also be added.

Also, suitable as non-conductive fillers are hollow spheres having a mineral shell or a plastic shell. These can be, for example, hollow glass spheres that are obtainable commercially under the trade names Glass Bubbles^{®}, Spheriglass or MasterBlast. Plastic-based hollow spheres, such as Expancel^{®} or Dualite^{®}, may be used and are described in EP 0520426 B1: they are made up of inorganic or organic substances and each have a diameter of 1 mm or less, preferably 500 µm or less, more preferably from 100 to 200 µm.

In a highly preferred embodiment, the non-conductive filler is selected from the group consisting of calcium carbonate, titanium oxide, and mixtures thereof.

Suitable commercially available non-electrically conductive fillers for use in the present invention include but are not limited to Alphawhite TI RC 82 from Alpha Calcit and ZP 64290F or Socal U1S1-G from Azelis

The non-electrically conductive filler may be present in the debondable adhesive composition according to the present invention in a quantity from 30 to 60% by weight of the total weight of the composition, preferably from 40 to 58% and more preferably from 45 to 56%.

The debondable adhesive composition according to the present invention may further comprise an adhesion promoter. The adhesion promoter is used to enhance the bonding between two surfaces.

Suitable adhesion promoters for use in the present invention may be selected from the group consisting of γ-aminopropyltrimethoxysilane, γ-aminopropyltriethoxysilane, N-(β-aminoethyl)-γ-aminopropyltrimethoxysilane, N-(β-aminoethyl)-γ-aminopropyltriethoxysilane, bis(γ-trimethoxysilylpropylamine), γ-ureidopropyltrimethoxysilane, 4-amino-3,3-dimethylbutyltrimethoxysilane, 4-amino-3,3-dimethylbutylmethyldimethoxysilane, N-ethyl-γ-aminoisobutyltrimethoxysilane, γ-methacηloxypropyltrimethoxysilane, γ-methacryloxypropyltriethoxysilane, γ-methacryamidopropyltrimethoxysilane, γ-methacryloxypropyltriisopropoxysilane and mixtures thereof, preferably the adhesion promoter is γ-aminopropyltrimethoxysilane.

Suitable commercially available adhesion promoter for use in the present invention include but is not limited to Dynasylan AMMO, GLYMO from Evonik or Silquest A-187 from Momentive.

The adhesion promoter may be present in the debondable adhesive composition according to the present invention in a quantity from 0.1 to 10% by weight of the total weight of the composition, preferably from 0.5 to 5% and more preferably from 0.75 to 2.5%.

These adhesion promoter quantities are preferred because higher quantities than 10% may lead to decrease cohesive properties whereas quantities less than 0.1% may lead to no enhanced adhesion properties.

The debondable adhesive composition according to the present invention may further comprise a plasticiser. A plasticizer for the purposes of this invention is a substance that decreases the viscosity of the composition and thus facilitates its processability.

Suitable plasticizer for use in the present invention may be selected from the group consisting of: diurethanes; ethers of monofunctional, linear or branched C4-C16 alcohols, such as Cetiol OE; esters of abietic acid, butyric acid, thiobutyric acid, acetic acid, propionic acid esters and citric acid; esters based on nitrocellulose and polyvinyl acetate; fatty acid esters; dicarboxylic acid esters; esters of OH-group-carrying or epoxidized fatty acids; glycolic acid esters; benzoic acid esters; phosphoric acid esters; sulfonic acid esters; trimellitic acid esters; polyether plasticizers, such as end-capped polyethylene or polypropylene glycols; polystyrene; hydrocarbon plasticizers; chlorinated paraffin; and, mixtures thereof.

Preferably the plasticizer is alkyl(C10-C21)sulphonic acid ester with phenol.

Suitable commercially available plasticizer for use in the present invention include but is not limited to Mesamoll, Ultramoll, Adimoll, K-flex 500 or Modulast ACE from Lanxess.

The plasticizer may be present in the debondable adhesive composition according to the present invention in a quantity from 1 to 15% by weight of the total weight of the composition, preferably from 2 to 12% and more preferably from 3 to 10%.

These plasticizes quantities are preferred because higher quantities than 15% may lead to decrease cohesive properties whereas quantities less than 1% may lead to detrimental increase of viscosity and flexibility leading to poor applicability and performance.

The debondable adhesive composition according to the present invention may further comprise a rheology modifier. The rheology modifier is used in the present invention to aid in the flow characteristics, thixotropy, and dispensed form stability.

Suitable rheology agent for use in the present invention may be selected from polyamides, hydrogenated castor oils, and/or amide modified hydrogenated castor oils, fatty acid amides and mixtures thereof.

Suitable commercially available plasticizer for use in the present invention include but is not limited to hydrogenated castor oil from Castor Products or Rheocin from BYK or Albothix 82-32 from Alberdingk Boley.

The rheology modifier may be present in the debondable adhesive composition according to the present invention in a quantity from 0.1 to 10% by weight of the total weight of the composition, preferably from 0.5 to 6% and more preferably from 1 to 3%.

These rheology modifier quantities are preferred because higher quantities than 10% may lead to decrease cohesive properties whereas quantities less than 0.1% may lead to detrimental increase of viscosity and flexibility leading to poor applicability and performance.

The debondable adhesive composition according to the present invention may further comprise a colourant.

Suitable colourants for use in the present invention are Tinuvin 328 from BASF and ZP-Tinuvin from Henkel AG & Co. KGaA.

The colourant may be present in the debondable adhesive composition according to the present invention in a quantity from 0.1 to 5% by weight of the total weight of the composition, preferably from 0.5 to 4% and more preferably from 1 to 3%.

There is no particular process to prepare the debondable adhesive according to the present invention, preferably all liquid components are mixed well together followed by low quantity solid components, filler component, if present, being added the last. Once all components are in the mixture, it is mixed thoroughly to ensure that all components are homogenously spread throughout the composition.

In an exemplary embodiment of the present invention, debondable adhesive composition comprises:
a) from 25 to 45% by weight of the total weight of the composition of a silyl group terminated polyether;
b) from 0.1 to 5% by weight of the total weight of the composition of a cross-linker;
c) from 0.01 to 5% by weight of the total weight of the composition of an electrically conductive particles; and
d) from 0.05 to 10% by weight of the total weight of the composition of an electrolyte.

In an exemplary embodiment of the present invention, debondable adhesive composition comprises:
a) from 27 to 40% by weight of the total weight of the composition of a silyl group terminated polyether, preferably from 28 to 35%;
b) from 0.25 to 3% by weight of the total weight of the composition of a cross-linker, preferably from 0.5 to 2.5%;
c) from 0.1 to 3% by weight of the total weight of the composition of an electrically conductive particles, preferably from 0.2 to 2%; and
d) from 0.05 to 8% by weight of the total weight of the composition of an electrolyte, preferably from 0.05 to 7%.

In an exemplary embodiment of the present invention, debondable adhesive composition comprises:
a) from 25 to 45% by weight of the total weight of the composition of a silyl group terminated polyether;
b) from 0.1 to 5% by weight of the total weight of the composition of a cross-linker;
c) from 0.01 to 5% by weight of the total weight of the composition of an electrically conductive particles;
d) from 0.05 to 10% by weight of the total weight of the composition of an electrolyte;
e) from 0.1 to 5% by weight of the total weight of the composition of a catalyst;
f) from 0.1 to 5% by weight of the total weight of the composition of a catalyst;
g) from 30 to 60% by weight of the total weight of the composition of non-electrically conductive fillers;
h) from 0.1 to 10% by weight of the total weight of the composition of an adhesion promoter;
i) from 1 to 15% by weight of the total weight of the composition of a plasticizer; and
j) from 0.1 to 10% by weight of the total weight of the composition of a rheology modifier.

In an exemplary embodiment of the present invention, debondable adhesive composition comprises:
a) from 27 to 40% by weight of the total weight of the composition of a silyl group terminated polyether, preferably from 28 to 35%;
b) from 0.25 to 3% by weight of the total weight of the composition of a cross-linker, preferably from 0.5 to 2.5%;
c) from 0.1 to 3% by weight of the total weight of the composition of an electrically conductive particles, preferably from 0.2 to 2%;
d) from 0.05 to 8% by weight of the total weight of the composition of an electrolyte, preferably from 0.05 to 7%;
f) from 0.25 to 3% by weight of the total weight of the composition of a catalyst, preferably from 0.5 to 2.5%;
g) from 40 to 58% by weight of the total weight of the composition of non-electrically conductive fillers, preferably from 45 to 56%;
h) from 0.5 to 5% by weight of the total weight of the composition of an adhesion promoter, preferably from 0.75 to 2.5%;
i) from 2 to 12% by weight of the total weight of the composition of a plasticizer, preferably from 3 to 10%; and
j) from 0.5 to 6% by weight of the total weight of the composition of a rheology modifier, preferably from 1 to 3%.

The present invention relates to a cured product of the debondable adhesive composition according to the present invention. The debondable adhesive composition according to the present invention is air curable composition. Curing happens at room temperature with 50% RH. When cured, the cured product exhibits a good adhesion.

The present invention relates to use of the debondable adhesive composition according to the present invention for a bonding of the electrical components like PCUs or the lids to gas tight sealed components inside the e-vehicle battery, and for the bonding and gasketing of lids and vibrationally sensitive components in general.

The present invention relates to a bonded structure comprising a first substrate having an electrically conductive surface; and a second substrate having an electrically conductive surface; wherein the debondable adhesive or cured debondable adhesive according to the present invention is disposed between the first and second substrates.

The first and second substrates can be same or different and not limited to any particular substrate material, however the substrate needs to have electrically conductive surface.

The substrates are shown in the form of a layer which may be constituted by *inter alia*: a metallic film; a metallic sheet; a metallic mesh or grid; deposited metal particles; a resinous material which is rendered conductive by virtue of conductive elements disposed therein; or, a conducting oxide layer. As exemplary conductive elements there may be mentioned silver filaments, single-walled carbon nanotubes and multi-walled carbon nanotubes. As exemplary conducting oxides there may be mentioned: doped indium oxides, such as indium tin oxide (ITO); doped zinc oxide; antimony tin oxide; cadmium stannate; and, zinc stannate. The selection of the conductive material aside, the skilled artisan will recognize that the efficacy of the debonding operation may be diminished where the conductive substrates (11) are in the form of a grid or mesh which offers limited contact with the layer of cured adhesive (10).

Examples of bonded structures are automotive components such as a battery, a casque and interior parts. Specific, non-limiting examples of e-mobility components are a battery lid, battery cells (cell-to-cell, cell-to-module, cell-to-body), battery modules, inverter, converter, electrical control units like the PCU or the PCB adhesion to the casing, and various structural adhesive applications and various thermally conductive applications.

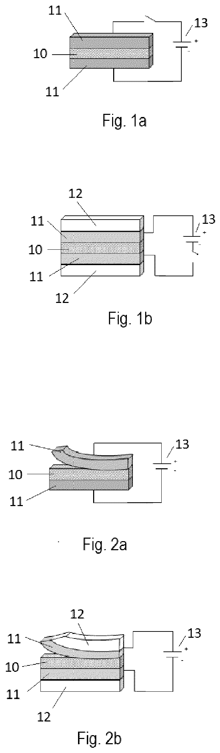

As illustrated in Figure 1a appended hereto, a bonded structure is provided in which a layer of cured adhesive (10) is disposed between two conductive substrates (11). A layer of non-conductive material (12) may be disposed on the conductive substrates (11) to form the more complex bonded structure as depicted in Fig. 1b. Each layer of conductive substrate (11) is in electrical contact with an electrical power source (13) which may be a battery or an AC-driven source of direct current (DC). The positive and negative terminals of that power source (13) are shown in one fixed position but the skilled artisan will of course recognize that the polarity of the system can be reversed.ä

The present invention relates to a method of debonding the bonded structure according to the present invention, the method comprising the steps of: i) applying a voltage across both surfaces to form an anodic interface and a cathodic interface; and ii) debonding the surfaces. Preferably the voltage applied in step i) is from 0.5 to 100 V and it is preferably applied for a duration of from 1 second to 60 minutes.

When an electrical voltage is applied between each conductive substrate (11), current is supplied to the adhesive composition (10) according to the present invention disposed there between. This induces electrochemical reactions at the interface of the substrates (11) and the adhesive composition, which electrochemical reactions are understood as oxidative at the positively charged or anodic interface and reductive at the negatively charged or cathodic interface. The reactions are considered to weaken the adhesive bond between the substrates allowing the easy removal of the debondable composition from the substrate.

Where the release of the conductive substrate from the cured adhesive is to be facilitated by the application of a force - exerted via a weight or a spring, for instance - the potential might only need to be applied for the order of seconds. In some embodiments potential of 5V for a duration of 10 minutes is sufficient to have a debonding effect, whereas in some embodiments, potential of 3.5V for a duration of 30 minutes is sufficient.

It is desired that after the debonding, the adhesive composition is solely on a first substrate or a second substrate, meaning that one of the substrates is substantially free of adhesive.

As illustrated in Figures 2a and 2b, the debonding occurs at the positive interface, that interface between the adhesive composition (10) and the electrically conductive surface (11) that is in electrical contact with the positive electrode. By reversing current direction prior to separation of the substrates, the adhesive bond may be weakened at both substrate interfaces.

It is however noted that the composition of the adhesive layer (10) may be moderated so that debonding occurs at either the positive or negative interface or simultaneously from both. For some embodiments a voltage applied across both surfaces so as to form an anodic interface and a cathodic interface will cause debonding to occur simultaneously at both the anodic and cathodic adhesive / substrate interfaces. In an alternative embodiment, reversed polarity may be used to simultaneously disbond both substrate / adhesive interfaces if the composition does not respond at both interfaces to direct current. The current can be applied with any suitable waveform, provided that sufficient total time at each polarity is allowed for debonding to occur. Sinusoidal, rectangular and triangular waveforms might be appropriate in this regard and may be applied from a controlled voltage or a controlled current source.

The following examples are illustrative of the present invention and are not intended to limit the scope of the invention in any way.

### Examples

The examples described hereunder exemplify the properties of the compositions according to the embodiments of the present invention. Unless otherwise indicated, all parts and percentages in following examples, as well as throughout the description, are parts by weight or percentages by weight respectively. The following examples are included for purposes of illustration so that the disclosure may be more readily understood and are in no way to be intended to limit the scope of the disclosure unless otherwise specifically indicated.

The debondable adhesive composition according to the present invention and comparative examples were prepared in accordance with Table 1 herein below.

Tensile Lap Shear (TLS) test was performed at room temperature and based upon ISO 4587-03. The Samples were prepared by cleaning the surface of the adherends with IPA and then with Bonderite M-NT 1455 wipes. After cleaning of the surface, the adhesive was applied, and the specimen were clamped with an overlap of 12.5 mm with bond thickness of about 150 µm. The adhered specimen was subsequently stored at 23°C and 50% r.h. for 7 days. After 7 days 5 of the specimens were subjected to 48V for 10 minutes to trigger the debonding. After the debonding all 10 specimen were tested according to ISO 4587-03. The failure mode was determined from visual analysis.

**Table 1**

| Component | Comp. Example 1 | Example 1 | Example 2 | Example 3 | Example 4 | Example 5 | |
|---|---|---|---|---|---|---|---|
| Vinyltrimethoxysilane from Sinopharm Chemical Reagent Co.,Ltd. | 1.50% | 1.48% | 1.48% | 1.47% | 1.42% | 1.47% | |
| Hydrogenated Castor Oil from Castor Products | 2.00% | 2.00% | 2.00% | 2.00% | 2.00% | 2.00% | |
| ZP-GM/Kat 50%ig from Henkel AG & Co. KGaA | 1.60% | 1.58% | 1.58% | 1.57% | 1.51% | 1.57% | |
| Alphawhite TI RC 82 from Alpha Calcit | 6.00% | 6.00% | 6.00% | 6.00% | 6.00% | 6.00% | |
| ZP 64920F from | 45.60% | 45.11% | 44.93% | 44.71 % | 43.02% | 44.71 % | |
| MS-POLYMER S303H from Kaneka | 33.04% | 32.68% | 32.55% | 32.39% | 31.17% | 32.39% | |
| Dynasylan AMMO from Evonik | 1.60% | 1.58% | 1.58% | 1.57% | 1.51% | 1.57% | |
| ZP-Tinuvin Solution from Henkel AG & Co. KGaA | 1.20% | 1.19% | 1.18% | 1.18% | 1.13% | 1.18% | |
| Mesamoll from Lanxess | 7.42% | 7.34% | 7.31% | 7.27% | 7.00% | 7.27% | |
| Tinuvin 328 from BASF | 0.00% | 0.00% | 0.00% | 0.00% | 0.00% | 0.00% | |
| Cyphos IL 169 from Solvay | 0.00% | 0.10% | 0.49% | 0.98% | 5.00% | 0.00% | |
| BMIM-FSI from lolitec | 0.00% | 0.00% | 0.00% | 0.00% | 0.00% | 0.98% | |
| GPX 802 from Cabot Corporation | 0.00% | 1.00% | 1.00% | 1.00% | 1.00% | 1.00% | |
| | | | | | | | |
| SUM | 100.00% | 100.00% | 100.00% | 100.00% | 100.00% | 100.00% | |
| | | | | | | | |
| TESTING | | | | | | | Example 2 with BONDERITE pre-treatment of surface |
| Lap Shear Strength before 48V for 10 mins | 0.902 | 0.677 | 0.573 | 0.71 | 0.369 | 2.3025 | 1.7 |
| Lap Shear Strength after 48V for 10 mins | 0.902 | 0.33 | 0.242 | 0.32 | 0.124 | 0.275 | 0.85 |
| Failure Mode before | cf | cf | cf | cf | cf | cf | cf |
| Failure Mode afterwards | cf | af | af | af | af | af | af |
| Reduction of strength (in %) | 0 | 51.26 | 57.77 | 54.93 | 66.40 | 88.11 | 50.00 |

From the results and examples, it becomes clear that even the addition of 0.1% of electrolyte leads to a decrease of >50% of adhesion after the application of 48V for 10 mins. This effect can be increased upon addition of more electrolyte up to 5%.

Due the fact that the initial adhesion is relatively low (< 1.0 MPa) in this type of adhesives, the initial adhesion was increased by using a surface treatment (see Example 2) with Bonderite M-NT 1455 pre-treatment. While the initial adhesion was significantly increased by this treatment, the debonding efficiency of 50% was still achieved.

## Claims

1. A debondable adhesive composition comprising
a) a silyl group terminated polyether;
b) a cross-linker;
c) an electrically conductive particles; and
d) an electrolyte.

2. The debondable adhesive composition according to claim 1, wherein the silylterminated polyether is a polyoxyalkylene group-based polymer having at least one alkoxysilyl group, preferably the silyl group containing two or three alkoxy groups and is preferably selected from at least one of methyl dimethoxy silyl group, trimethoxy silyl group and triethoxy silyl group and wherein the polyoxyalkyene group comprise oxymethylene units (CHsO), oxyethylene units (C₂H₄O), oxypropylene units (C₃H₆O), oxybutylene units (C₄H₈O), oxytetramethylene units and mixtures thereof, preferably the polyoxyalkyene group comprise oxypropylene units (C₃H₆O) composed of -*CH₂CH(CH₃)O*-.

3. The debondable adhesive composition according to claim 1 or 2, wherein the silylterminated polyether is present in a quantity from 25 to 45% by weight of the total weight of the composition, preferably from 27 to 40% and more preferably from 28 to 35%.

4. The debondable adhesive composition according to any of claims 1 to 3, wherein the cross linker is a silicon containing vinyl monomer, preferably selected from the group consisting of vinyltrimethoxysilane, vinyltriethoxysilane, methacryloxypropyltrimethoxysilane, vinyltris(2-methoxyethoxy)silane, methacryloxypropyltriethoxysilane, vinyltriacetoxysilane, vinylmethyldiethoxysilane, vinylmethyldimethoxysilane, vinylphenylmethyldimethoxysilane, vinylphenylmethyldiethoxysilane and mixtures thereof, more preferably the cross linker is vinyltrimethoxysilane.

5. The debondable adhesive composition according to any of claims 1 to 4, wherein the cross linker is present in a quantity from 0.1 to 5% by weight of the total weight of the composition, preferably from 0.25 to 3% and more preferably from 0.5 to 2.5%.

6. The debondable adhesive composition according to any of claims 1 to 5, wherein the catalyst is a tin catalyst, preferably selected from the group consisting of dibutyltin dibutylate, dibutyltin dilaurate, dibutyl tin diacetate, dibutyltin maleate, dibutyltin diethoxide, dibutyltin dichloride, and mixtures thereof, more preferably the catalyst is dibutyltin dibutylate.

7. The debondable adhesive composition according to any of claims 1 to 6, wherein the catalyst is present in a quantity from 0.1 to 5% by weight of the total weight of the composition, preferably from 0.25 to 3% and more preferably from 0.5 to 2.5%.

8. The debondable adhesive composition according to any of claims 1 to 7, wherein the electrically conductive particles are selected from the group consisting of carbon nanostructures, carbon nanotubes, spherical graphite, graphite flakes, and mixtures thereof, preferably the electrically conductive particles are carbon nanostructures.

9. The debondable adhesive composition according to any of claims 1 to 6, wherein the electrically conductive particles are present in a quantity from 0.01 to 5% by weight of the total weight of the composition, preferably from 0.1 to 3% and more preferably from 0.2 to 2%.

10. The debondable adhesive composition according to any of claims 1 to 9, wherein the electrolyte is from the group consisting of: 1-ethyl-3-methyl-1H-imidazol-3-um methansulfonate, 1-ethyl-3-methyl-1H-imidazol-3-um methyl sulfate, 1-methylimidazolium bis(trifluoromethylsulfonyl)imide, 3-methylimidazolium bis(trifluoromethylsulfonyl) imide, 1-ethyl-3-methylimidazolium bis(trifluoromethylsulfonyl)imide, 1-propyl-3-methylimidazolium bis(trifluoromethylsulfonyl)imide, 1-butyl-3-methylimidazolium bis(trifluoromethylsulfonyl)imide, 1-butyl-2,3-dimethylimidazolium bis(trifluoromethylsulfonyl) imide, 1-hexyl-3-methylimidazolium bis(trifluoromethylsulfonyl)imide, 1-octyl-3-methylimidazolium bis(trifluoromethylsulfonyl)imide, 1-methyl-3-octylimidazolium bis(trifluoromethylsulfonyl)imide, 1-decyl-3-methylimidazolium bis(trifluoromethylsulfonyl)imide, 1-dodecyl-3-methylimidazolium bis(trifluoromethylsulfonyl)imide, tetraethylphosphonium bis(trifluoromethylsulfonyl)imide, tetrabutylphosphonium bis(trifluoromethylsulfonyl)imide, tetraoctylphosphonium bis(trifluoromethylsulfonyl)imide, trihexyl(tetradecyl)phosphonium bis(trifluoromethylsulfonyl)imide, tridecyl(tetradecyl)phosphonium bis(trifluoromethylsulfonyl)imide, tributyl(methyl)phosphonium diethylphosphate, tributyl(ethyl)phosphonium diethylphosphate, tetraoctylphosphonium diethylphosphate, and, mixtures thereof, preferably the electrolyte is selected from 1-ethyl-3-methylimidazolium bis(trifluoromethylsulfonyl)imide, tributyl(ethyl)phosphonium diethylphosphate, and mixtures thereof.

11. The debondable adhesive composition according to any of claims 1 to 10, wherein the electrolyte is present in a quantity from 0.05 to 10% by weight of the total weight of the composition, preferably from 0.05 to 8% and more preferably from 0.05 to 7%.

12. A cured product of the debondable adhesive composition according to any of claims 1 to 11.

13. Use of the debondable adhesive composition according to any of claims 1 to 12 for a bonding of the electrical components inside the e-vehicle battery.

14. A bonded structure comprising
a first substrate having an electrically conductive surface; and,
a second substrate having an electrically conductive surface;
wherein the cured debondable adhesive according to any one of claims 1 to 12 is disposed between the first and second substrates.

15. A method of debonding the bonded structure according to claim 14, the method comprising the steps of:
i) applying a voltage across both surfaces to form an anodic interface and a cathodic interface; and
ii) debonding the surfaces.

16. The method according to the claim 15, wherein the voltage applied in step i) is from 0.5 to 100 V and it is preferably applied for a duration of from 1 second to 60 minutes.
